# EUROPEAN PATENT SPECIFICATION

(11) **EP 1 058 495 B1**
(45) Date of publication and mention of the grant of the patent: **25.06.2003**
(21) Application number: 99900581.2
(22) Date of filing: 21.01.1999
(51) Int. Cl.: A01G 1/02

(54) **PLASTIC SHEET FOR TOTAL GROUND COVERING**
KUNSTSTOFFFOLIE FÜR GESAMTE GRUNDBEDECKUNG
FEUILLE DE PLASTIQUE UTILE POUR RECOUVRIR TOTALEMENT LE SOL

(30) Priority: 25.11.1998 GR 98100434
(43) Date of publication of application: 13.12.2000
(73) Proprietor: Daios, Asterios D., 592 00 Naousa (GR)
(72) Inventor: Daios, Asterios D., 592 00 Naousa (GR)
(74) Representative: Argyriadis, Korinna
(86) International application number: GR9900008
(87) International publication number: WO00030428

(56) References cited:
- DE-A- 19 500 635
- DE-U- 9 213 273
- DE-U- 29 618 448

## Description

We present the invention of a plastic sheet for the total ground covering of linear cultivation of asparagus or any other linear cultivation covered in low tunnels. The characteristic of the plastic sheet for the total ground covering of linear cultivation is that it covers the whole area of the cultivated land and not only the planted rows, as it happens with common plastic sheets for ground covering (which cover under 40% of the cultivated land). In combination with the rest of the plastic sheet's attributes, this gives us a control of the yield of the cultivation, as a result of
a) the passive heating of the ground (if it has thermal qualities),
b) the maintenance of low temperatures and, thus, the control of the production when it reflects solar radiation partially or totally (e.g. when it is non-transparent and has at least a white or light coloured surface), or
c) the weed-killing on all the cultivated area and the quality of the asparagus (when it is non-transparent and preferably black coloured).

Until now, the covering of linear cultivation - e.g. of the asparagus - with plastic sheet directly on the ground or under low tunnels is performed with stripes of plastic sheet whose width is half the distance between two planted rows, and which covers only a narrow area along the planting row. In this way, the covered area is passively heated and the protection and earliness of the crops is assisted. A plastic sheet as in the preamble of claim 1 is known from DE-U-296 18 448.

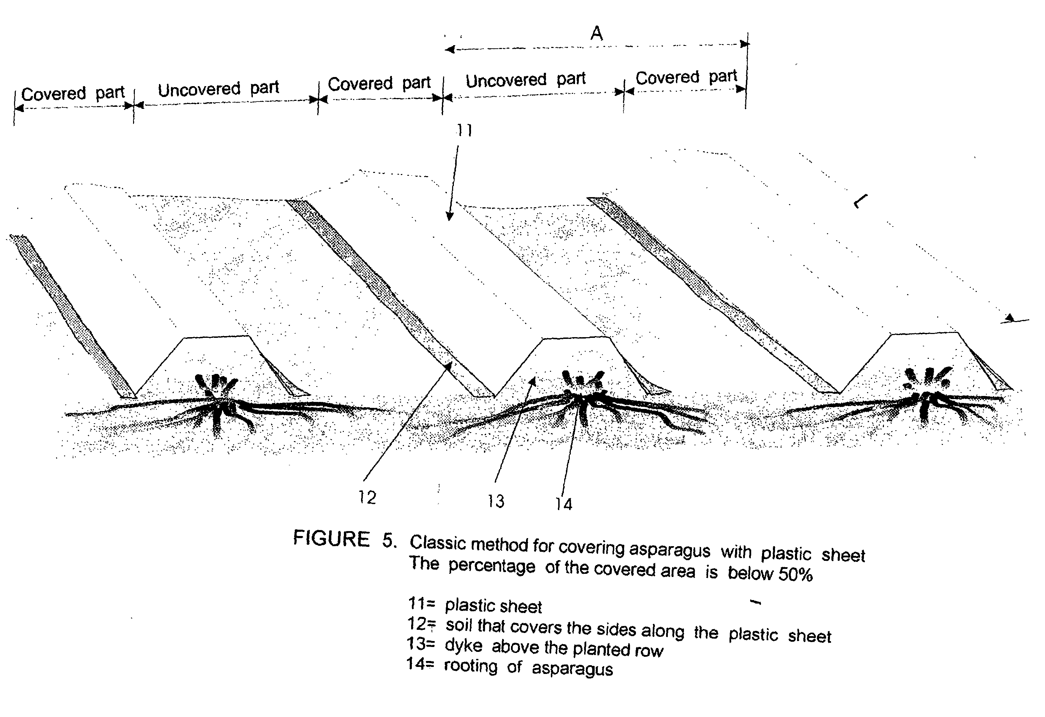

In order to understand what happens with the classic method of covering linear cultivation with simple plastic sheets imagine that we see the field from the sky and that it consists of oblong alternating rows ,covered and uncovered, of length L and width of about 1 meter (see fig. 5, where grey stripes are the uncovered parts and white the covered parts). Usually, the percentage of the covered area is below 50%. This means that the rest 50% of the ground is not passively heated with the help of plastic sheet and that the temperature of the ground surface is not stable overall but it fluctuates from a maximum along the row covered with the plastic sheet to a minimum across the uncovered row.

This fluctuation of temperature is not harmful to most cases of linear cultivation, especially those that last one year.

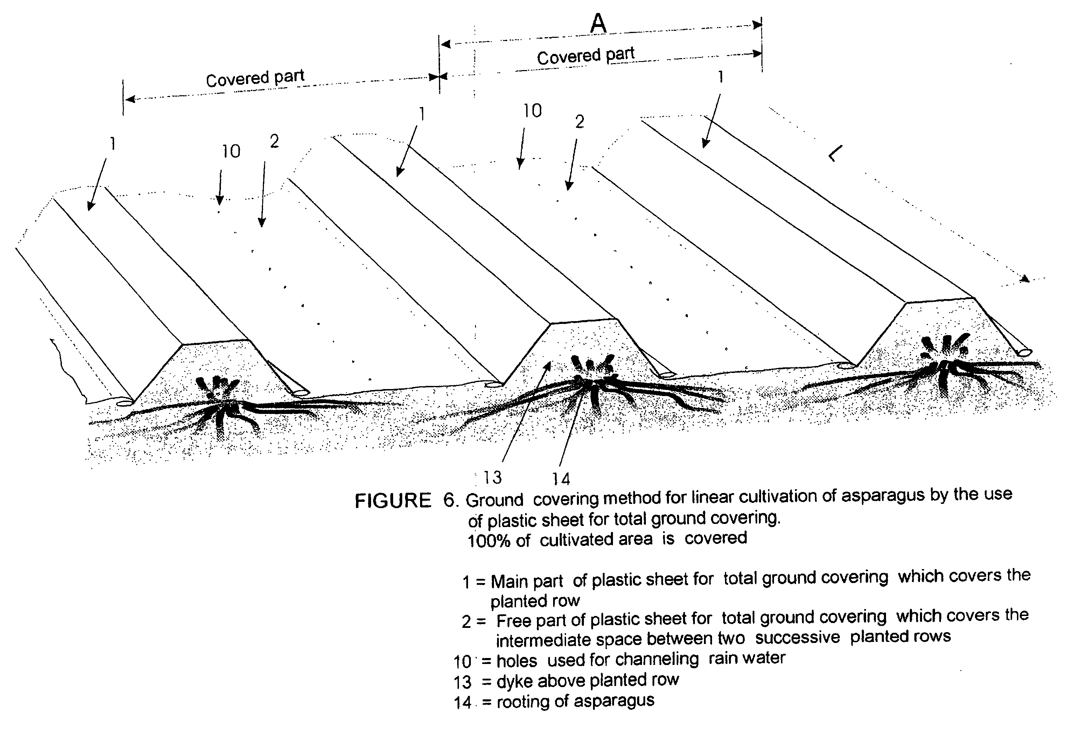

In certain cases of linear cultivation, though, predominantly multiannual ones like the asparagus, the rooting expands outside the covered zone (fig. 5 and 6) and, as a result, that part of the rooting which is not protected by the plastic sheet of ground covering is immediately subject to weather conditions, a factor which delays the earliness of the asparagus crops.

A solution to this problem would be the use of an additional stripe of plastic sheet along the linear cultivation, which would cover the intermediate space between the two rows.

This stripe, though, would be hard to hold against the wind and in order for this to be achieved an amount of soil should be spread on its surface at regular distance, something which demands high cost of labour, diminishes the surface of passive heating and hampers the cultivating process.

In order for these problems to be solved and the output of the ground covering to be maximised, the inventor of the present invention suggests a pioneering solution which is easy to apply.

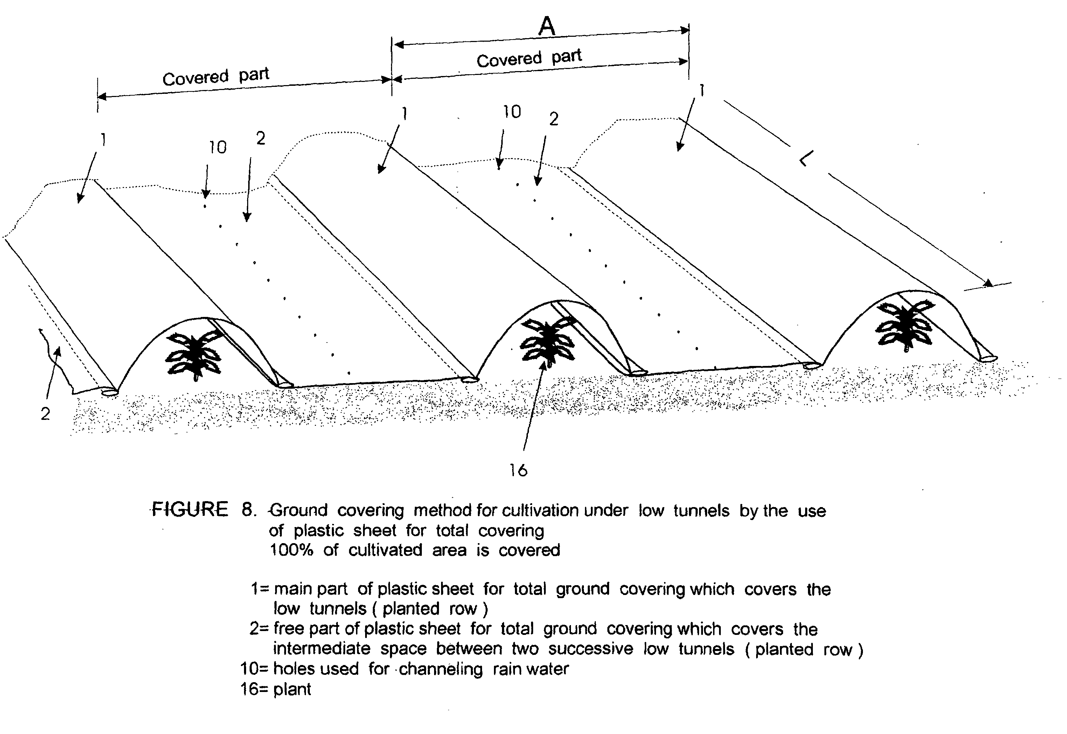

According to this solution, the plastic sheet of ground covering which is used for covering the planted row (around 40% of the cultivated land) (1) is expanded sideways (2) so that it can cover the rest 60% of the cultivated land. Thus, every row (stripe) of plastic sheet covers both the planted row and the intermediate space between two planted rows (fig. 6 and 8) leaving no uncovered space. The edge, along the plastic sheet, (5) of the part that covers the intermediate space (2) is slightly covered - during the successive fitting of the plastic sheets - by the end (folding 4) of the plastic sheet that covers the next planted row. Covering with the suggested plastic sheet of total ground covering reminds a succession type of horizontal S's (∼∼∼∼) where the convex refers to the part that covers the individual planted row and the concave refers to the intermediate space.

It is clear that such a plastic sheet should offer on the one hand the ability to visit the planted row and, on the other, it should be stable at the part between the two successive planted rows.

In order to achieve the ability to visit the zone of planted rows, this part of the plastic sheet should be fixed having along the two ends lengthways (3 and 4) small parts of weight insertion ( the weight could be water, wet mud, sand or thinly ground soil). With this weight which is added during the fitting of the plastic sheet over the cultivation, the plastic sheet is fixed against the wind and adverse weather conditions providing at the same time the ability to the user to lift it from one side (end 4) and perform all the necessary cultivating process, e.g. harvesting, with great ease.

On the other hand, the free part (2) should be wide enough to enable us to fit its lengthways edge (5) under the long side of the weight insertion part (c) of the next plastic sheet so that it gets fixed (fig. 6, 8).

It is clear that the presence of holes (10) or slits (9) along the free part - preferably in the middle - at regular distance could be utilised as a system of uniform flow of rain water to the ground.
The advantages of this invention can be summarised in the following:
a) The ground is passively heated on all its surface. This means more earliness for the covered cultivation.
b) It can provide weed-killing if the plastic sheet of total ground covering is non-transparent (e.g. black) over the whole cultivated land (drastic reduction in pesticide use).
c) In combination with other materials that absorb or reflect infrared radiation as e.g. IR-absorbers, it can offer maximum passive heating and crops earliness.
d) In case the plastic sheet for total ground covering has reflective qualities (e.g. white at its surface), it can offer crops delay in combination with weed-killing, if needed.
e) The use of plastic sheet for total ground covering is easier than other common plastic sheets.
f) For the cultivation of asparagus in particular, it offers the possibility to open and close the covered surface at any time point.
g) Due to the fact that the whole surface is being covered, the moves of farmers are easier in case of muddy ground after prolonged rain, since they walk on the free part (4) of the plastic sheet for total ground covering, at the intermediate space.
h) The moisture of the ground is retained, in case of prolonged drought, since the whole surface is covered. Otherwise, if needed, the excessive moisture could be let out by opening and closing the free part (2) at the intermediate zone. In case the field is on a slope, the plastic sheet for total ground covering can act as a way for channelling water out of the cultivated land.
i) It is easier to recycle than other common plastic sheets for ground covering because it is easier to fold away (it is not covered by soil) and the weight content for holding it down can be discarded by tearing the weight insertion flattened tubes lengthways.

Here follows a description of the invention with reference to the figures of schematic display:
- Figure 1: The plastic sheet according to the first way of applying the invention for total ground covering.
- Figure 2: The plastic sheet according to a second way of applying the invention for total ground covering.
- Figure 3: The plastic sheet according to a third way of applying the invention for total ground covering
- Figure 4: Production process according to the first way of inventing the plastic sheet for total ground covering.
- Figure 5: Detail of the classic method for covering asparagus with simple plastic sheet (showing partial covering of the ground - under 40% - and lack of protection for that part of the roots which lies under the surface of the intermediate zone).
- Figure 6: Detail of asparagus cultivation covered with plastic sheet for total ground covering (showing clearly the total covering of the ground over both zones; the planted row and the intermediate space. We can also see the overlapping of two successive plastic sheets for total ground covering along a narrow zone).
- Figure 7: The plastic sheet for total ground covering during its three application stages over the cultivation of asparagus (step 1: spreading it, step 2: retaining it until the harvesting period, step 3: opening the free part (2) at the beginning of the harvesting period or right before it).
- Figure 8: Application of the plastic sheet for total ground covering to cultivation under low tunnels

Here follows a description of one way for producing the invention.

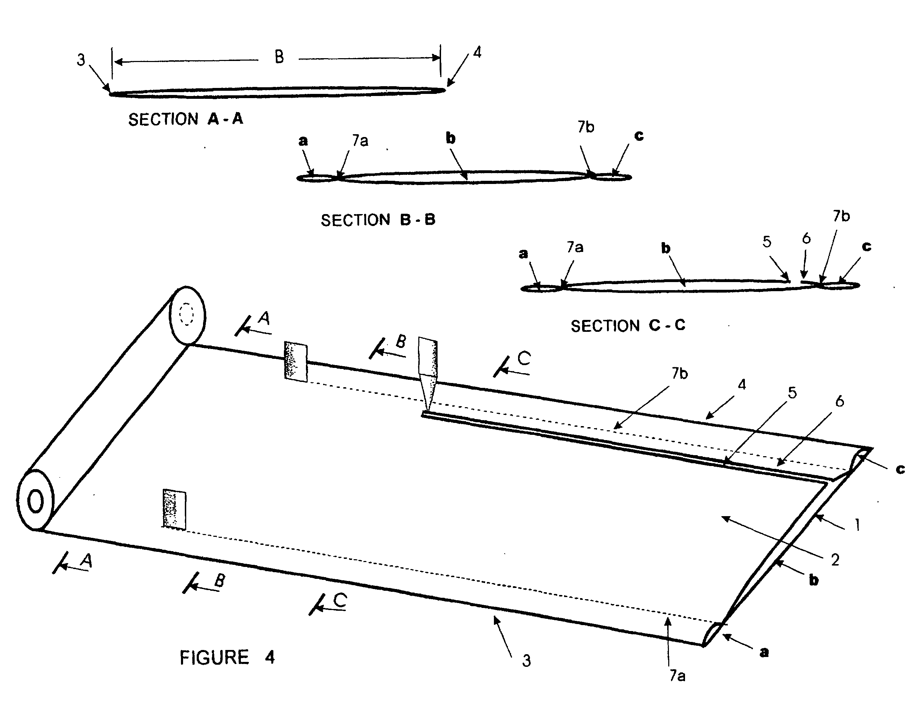

A plastic sheet produced by the method of extrusion from a cyclical mould (BLOWN FILM) of thickness up to 200µm after passing the take-off unit forms a flattened tube (section A-A, fig. 4) of width up to 4 meters (B) preferably between 1.4 to 1.6 meters. The two superimposed sheets are welded in a linear (7a,7b) continuous and lengthways parallel fashion and at a distance up to 40 cm from the edges of the flattened tube. (edges 3, 4) - and preferably at a distance 10 cm. In this way three new flattened tubes (a, b, c) are formed (section B-B, fig. 4). The flattened tubes a and c, for reasons of uniformity, are suggested to have the same width preferably of 10cm.

The middle flattened tube (b) is enclosed between the two superimposed plastic sheets and the two linear lengthways welds (7a - 7b). One of the plastic sheets is cut longitudinally very close to one of the weld line ( 7b), ( section C-C, fig. 4 ) creating two new ends (5, 6) and a free part (2) of width approximately B - 2s (where 's' refers to the width of the flattened tube a or c), giving to the plastic sheet for total ground covering its final form.

Finally, the plastic sheet for total ground covering is wind into rolls - preferably under 1000 meters long - so that its use is facilitated

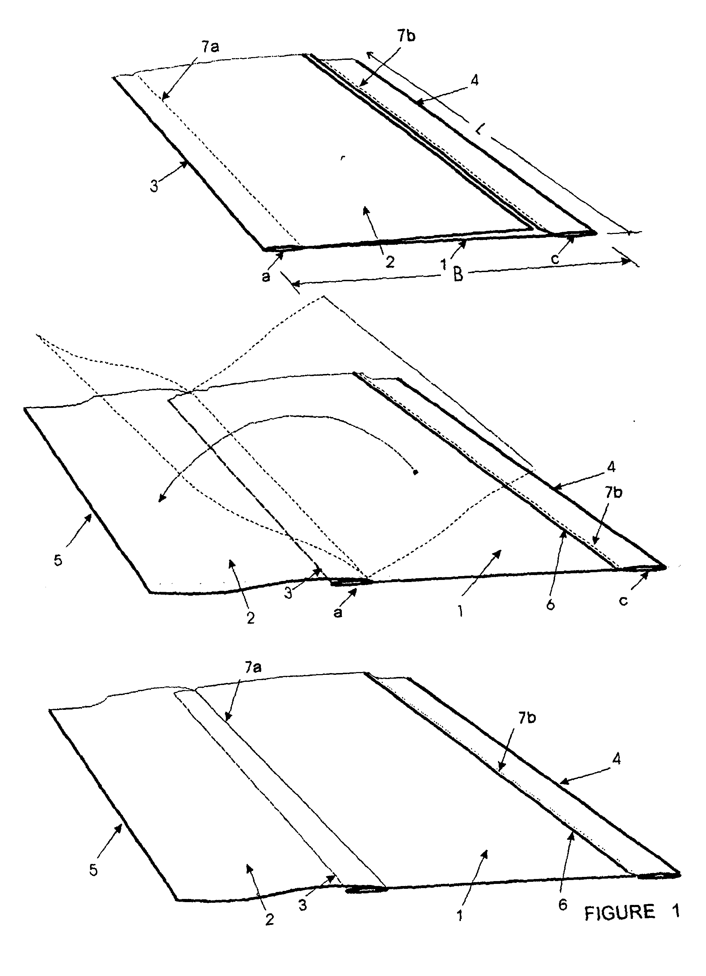

Once the free part (2) is opened widthways - fig. 1, 2b and 3b - we get the full expansion of the plastic sheet for total ground covering which is about (2B - 2s) and suffices to cover, when used, both the planted row and intermediate space.

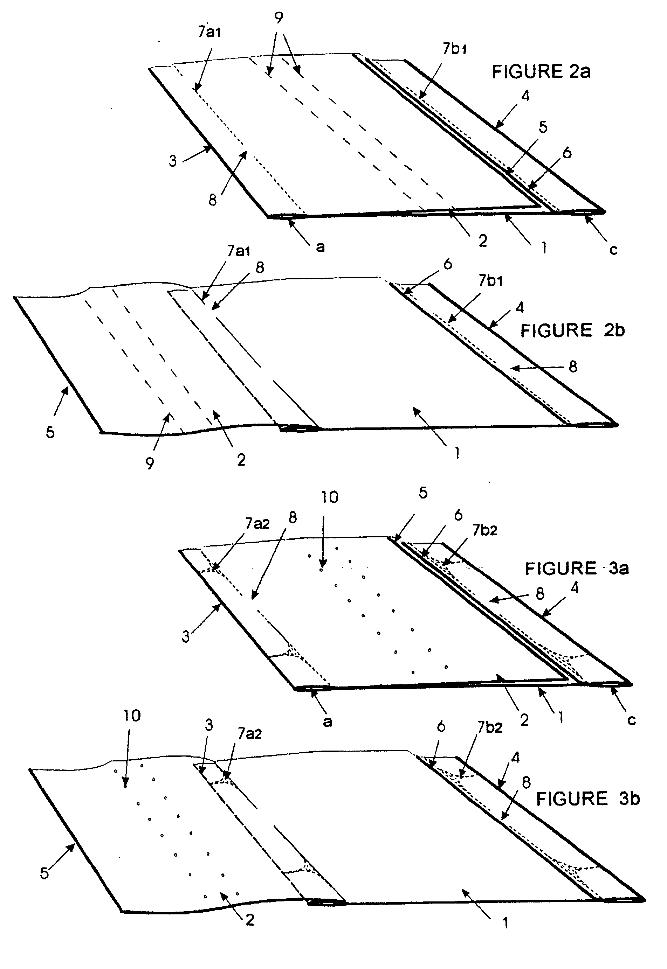

If we open small holes (10) or slits (9) (fig. 2 and 3) on the free part (2) of the plastic sheet for total ground covering during its production at frequent and regular distance we have the extra ability, in case of rain, to use it for channelling water to the ground, thus retaining ground moisture at the intermediate space as well as assisting the moves of farmers on the plastic sheet due to the absence of mud (this means that the harvest worker can enter for picking the crops right after a rainfall, something impossible with common plastic sheets).

Every such plastic sheet for total ground covering consists of the following parts:
a) the main part (1 in all figures) whose aim at its use is to cover the planted row
b) the free part (2 in all figures) whose aim at its use is to cover the intermediate space between two planted rows.
c) the two lengthways arrayed flattened tubes for weight insertion (a, c) which are placed one around the middle of the width of the open plastic sheet for total ground covering and the other at one of its ends.
d) the openings for weight insertion on the flattened tubes for holding weight (6) which are placed at the beginning or the end of each row of the plastic sheet for total ground covering (fig. 1), for supplying water (when water is used as weight), and
e) the lengthways and at regular distance repeated openings - holes (10) or slits (9) - for channelling rain water to the ground, which are preferably placed at the middle of the free part (2) widthways.

According to another production solution (fig. 2a, 2b) the two superimposed plastic sheets are welded in a linear, non-continuous and lengthways parallel fashion (7a1, 7b1). In this way the length of every welded part is preferably under one meter and the non-welded part (8) between two welded parts is preferably 10-15 cm long, functioning at the same time as the opening for the weight insertion (8).

According to another production solution (fig. 3a, 3b) the two superimposed plastic sheets are welded with consecutive shaped welds. Also in this way the length of every welded part is preferably under one meter and the non-welded part (8) between two welded parts is up to 15 cm long, functioning at the same time as the opening for the weight insertion (8).

It is obvious that several combinations of above solutions can be adopted.

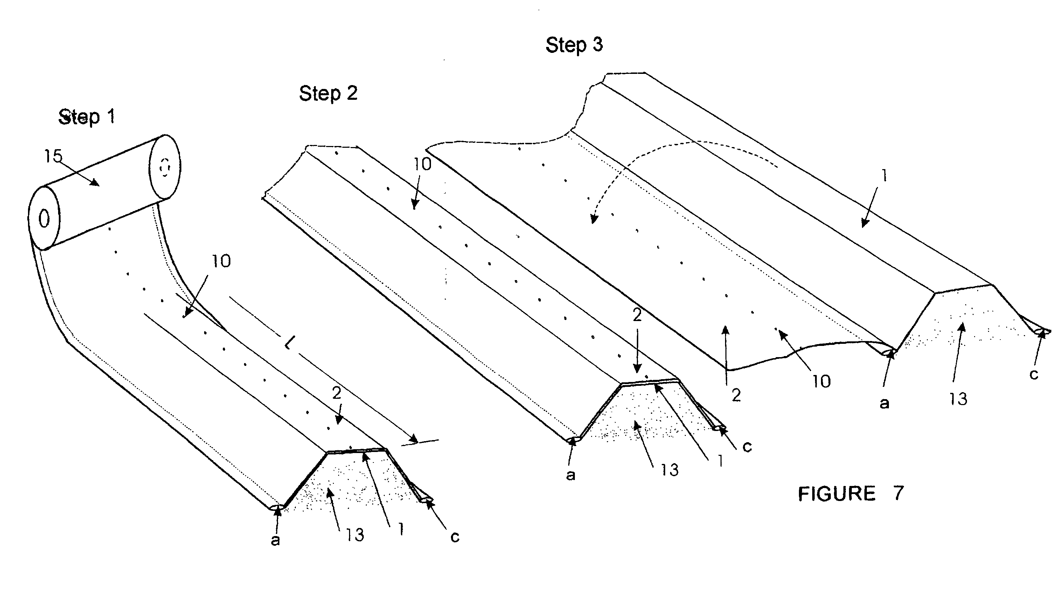

During the use of the plastic sheet for total ground covering (fig. 7 step 1), the user should unfold it lengthways and spread it first upon the planted row (trapezium shaped dyke at the cultivation of the asparagus or low tunnel). After it is spread, the two lengthways arrayed flattened tubes (a, c) for weight insertion are being filled with thinly ground soil, water etc. through the insertion openings, depending on their production method.

Until the beginning of the harvesting period, the plastic sheet for total ground covering stays as it is, i.e. without opening its free part (2) which is aimed at covering the intermediate space (fig. 7 step 2). In this ways we achieve two goals: on the one hand, the intermediate space can be subject to rainfalls, wind effects etc. during the period that it does not need to be passively heated, whereas on the other, the part which covers the planted row and is of primary importance a) does not get wet and b) has the highest possible temperature because it is covered with two superimposed parts of plastic sheet - the main part (1) and the free part (2) - bearing all the consequent advantages.

Right before or during the beginning of the harvesting period the farmer pulls the free part (2) of the plastic sheet for total ground covering which lies all this time above or below the main part (1) for covering the planted row and s/he spreads it over the intermediate space (fig. 7 step 3) where, due to its width, it gets lengthways partially covered by the main part of the plastic sheet for total ground covering of the next row, reminding in this way a succession type of horizontal S's. This procedure is repeated for every row so that, eventually, the whole cultivated land is totally covered (fig. 6 and 8). In this way, we have total passive heating for the whole covered surface.

Combining the advantages of the plastic sheet for total ground covering with putting additional materials in its substance we can create a number of new ways for interfering with the cultivated land in order to achieve the best outcome required.

In case it is required:
a) the addition of materials that absorb or reflect the infrared radiation from the ground can offer 100% exploitation of the passive ground heat.
b) the addition of white colour or materials that reflect solar radiation can offer heat reduction under all the covered surface and, consequently, crops delay and weed-killing (reducing the use of pesticides).
c) the addition of colours and most preferably black in order to render the plastic sheet for total ground covering completely non-transparent can offer an improvement in the quality of the asparagus and total weed-killing (reducing the use of pesticides).

Finally, if the plastic sheet for total ground covering has one of its surface white (or light coloured in general) and the other black (or dark coloured in general) it combines the advantages of both cases b) and c).

## Claims

1. Plastic sheet for total ground covering of linear cultivation of asparagus and cultivation under low tunnels, produced through the method of blown film extrusion, formed into a flattened tube, with thickness up to 200 µm and layflat-width (B) up to 4 meters preferably between 1.4 to 1.6 meters **characterised by** the fact that:
a) the two superimposed parts of the plastic sheet are welded together lengthways by two series of welds (7a,7b), each one of these is at a distance (s) up to 40 cm preferably at 10 cm of its corresponding layflat-edge (3 or 4), which separate the plastic sheet widthways into three bags (a,b,c) and
b) one of the two superimposed parts of the plastic sheet is cut lengthways, between the two series of welds(7a, 7b), very close to one of these (7b), preferably at a distance of less than 5 cm,
forming the plastic sheet into :
i) a main part (1) with a width (B) consisting of the bags (a) and (c) as well as the uncut part of the plastic sheet of former bag (b) which can be applied in such way that it firmly covers the planted row when the bags (a, c) are filled with weight and
ii) a free part (2) with a width of approximately (B - 2s) consisting of the cut part of the plastic sheet of former bag (b) which can be applied either closed - superimposed upon the main part (1) - covering only the planted row in this way, or open - extending the main part (1) when turned over - covering in this way the intermediate space between two successive planted rows,

2. Plastic sheet for total ground covering according to claim 1, **characterised by** the fact that its welds (7a, 7b) are linear and continuous (fig. 1).

3. Plastic sheet for total ground covering according to claim 1, **characterised by** the fact that its welds are linear and interrupted repeated linear parts (7a1, 7b1) each having a length of preferably less than one meter whereas the distance between two successive welded parts - the unwelded part - is preferably up to 15 cm ( fig. 2 ).

4. Plastic sheet for total ground covering according to claim 1, **characterised by** the fact that its welds are repeated shaped welded parts (7a2 , 7b2 ), each having a length of preferably less than one meter whereas the distance between two successive welded parts - the unwelded part - is preferably up to 15 cm ( fig. 3 ).

5. Plastic sheet for total ground covering according to claim 1, **characterised by** the fact that it bears on its free part (2) - preferably in the middle of its width - continuous holes (10) or slits (9) or a combination of both at regular distance, which can be used for channelling rain water to the ground.

6. Plastic sheet for total ground covering according to claim 1 plus one or more of claims 2 to 5, **characterised by** the fact that it bears in its substance additional materials which absorb the IR-radiation from the ground, making the plastic sheet function as a thermal sheet in this way.

7. Plastic sheet for total ground covering according to claim 1 plus one or more of claims 2 to 5, **characterised by** the fact that it is non-transparent and preferably black, contributing in this way to the improvement of the quality of asparagus and the process of biological weed-killing.

8. Plastic sheet for total ground covering according to claim 1 plus one or more of claims 2 to 5, **characterised by** the fact that one of its surfaces is white (or of a light colour in general) for reflecting solar radiation while the other one is black (or of a dark colour in general) in order to obtain a completely dark space over the covered cultivation.

9. Ground covering method for linear cultivation of asparagus or cultivation under low tunnels, **characterised by** the use of plastic sheet for total ground covering, which at the initial stage of its application (fig. 7 step 2) is placed upon the planted row and remains closed a free part 2 and a main part 1 are superimposed on each other this way improving passive heating, and at the consecutive stage of its application (fig. 7 step 3), which slightly precedes or coincides with the beginning of the harvesting period, the free part (2) is opened in order to cover the intermediate space between two planted rows reaching until the next plastic sheet for total ground covering, the repetition of this procedure resulting in total covering of the cultivated land.

## Patentansprüche

1. Plastikfolie zur vollständigen Bodenbedeckung von linearer Spargelkultur und einer Kultur unter niedrigen Tunneln, produziert nach dem Verfahren des Strangpressens einer Schlauchfolie und in ein abgeplattetes Rohr geformt, mit einer Dicke von bis zu 200 µm und einer flachgelegten Breite (B) von bis zu 4 Metern, bevorzugt von 1,4 bis 1,6 Metern, **gekennzeichnet dadurch, daß**:
a) die zwei aufeinandergelegten Teile der Plastikfolie durch zwei Reihen von Schweißungen (7a, 7b) in Längsrichtung miteinander geschweißt sind, wobei jede dieser Reihen sich in einem Abstand (s) von bis zu 40 cm, bevorzugt 10 cm, vom entsprechenden flachgelegten Ende (3 oder 4) befindet, das die Plastikfolie in der Breite in drei Beutel (a, b, c) trennt, und
b) jedes dieser zwei aufeinandergelegten Teile der Plastikfolie in Längsrichtung zwischen den beiden Reihen von Schweißungen (7a, 7b), sehr nah an einer davon (7b), bevorzugt in einem Abstand kleiner als 5 cm, geschnitten ist,
wobei die Plastikfolie geformt wird:
i) in einen Hauptteil (1) mit einer Breite (B), bestehend aus den Beuteln (a) und (c) sowie aus dem ungeschnittenen Teil der Plastikfolie eines vorangegangenen Beutels (b), der in einer solcher Art und Weise appliziert werden kann, daß er die gepflanzte Reihe fest bedeckt, wenn die Beutel (a, c) mit Gewicht gefüllt werden, und
ii) in einen freien Teil (2) mit einer Breite von etwa (B-2s), bestehend aus dem geschnittenen Teil der Plastikfolie eines vorangegangenen Beutels (b), der entweder geschlossen - auf den Hauptteil (1) aufgelegt - auf diese Art und Weise nur die gepflanzte Reihe bedeckend, oder geöffnet appliziert werden kann - wobei er den Hauptteil (1) erweitert, wenn er umgekehrt wird - auf diese Art und Weise den Zwischenraum zwischen zwei aufeinanderfolgenden gepflanzten Reihen bedeckend.

2. Plastikfolie zur vollständigen Bodenbedeckung nach Anspruch 1, **gekennzeichnet dadurch, daß** ihre Schweißungen (7a, 7b) linear und kontinuierlich sind (Fig. 1).

3. Plastikfolie zur vollständigen Bodenbedeckung nach Anspruch 1, **gekennzeichnet dadurch, daß** ihre Schweißungen linear und unterbrochen sind, wiederholte lineare Teile (7a1, 7b1), jedes von denen bevorzugt eine Länge von weniger als einen Meter aufweist, während der Abstand zwischen zwei aufeinanderfolgenden geschweißten Teilen - der ungeschweißte Teil - bevorzugt bis zu 15 cm beträgt (Fig. 2).

4. Plastikfolie zur vollständigen Bodenbedeckung nach Anspruch 1, **gekennzeichnet dadurch, daß** ihre Schweißungen wiederholt geformte geschweißte Teile (7a2, 7b2) sind, jedes von denen bevorzugt eine Länge von weniger als einen Meter aufweist, während der Abstand zwischen zwei aufeinanderfolgenden geschweißten Teilen - der ungeschweißte Teil - bevorzugt bis zu 15 cm beträgt (Fig. 3).

5. Plastikfolie zur vollständigen Bodenbedeckung nach Anspruch 1, **gekennzeichnet dadurch, daß** sie an ihrem freien Teil (2) - bevorzugt in der Mitte seiner Breite - kontinuierliche Öffnungen (10) oder Schlitze (9) oder eine Kombination dieser in einem regelmäßigen Abstand aufweist, wobei diese zur Ableitung von Regenwasser in den Boden genutzt werden können.

6. Plastikfolie zur vollständigen Bodenbedeckung nach Anspruch 1 und nach einem oder mehreren der Anspüche 2 bis 5, **gekennzeichnet dadurch, daß** sie Zusatzmaterialien enthält, die die IR-Strahlung vom Boden absorbieren, wodurch die Plastikfolie als eine thermische Folie funktioniert.

7. Plastikfolie zur vollständigen Bodenbedeckung nach Anspruch 1 und nach einem oder mehreren der Anspüche 2 bis 5, **gekennzeichnet dadurch, daß** sie undurchsichtig und bevorzugt schwarz ist, wodurch sie zur Qualitätsverbesserung des Spargels und zur Verbesserung des biologischen Unkrautbekämpfungsverfahrens beiträgt.

8. Plastikfolie zur vollständigen Bodenbedeckung nach Anspruch 1 und nach einem oder mehreren der Anspüche 2 bis 5, **gekennzeichnet dadurch, daß** eine ihrer Flächen weiß (oder generell hellfarbig) ist, um die Sonnenstrahlung zu reflektieren, während die andere Fläche schwarz (oder generell dunkelfarbig) ist, um einen absolut dunklen Raum über der überdeckten Kultur zu erhalten.

9. Verfahren zur Bodenbedeckung von linearer Spargelkultur und einer Kultur unter niedrigen Tunneln, **gekennzeichnet durch** die Verwendung einer Plastikfolie zur vollständigen Bodenbedeckung, wobei die Plastikfolie in der Anfangsphase ihrer Applikation (Fig. 7, Schritt 2) über die gepflanzte Reihe gelegt wird und geschlossen bleibt, ein freier Teil 2 und ein Hauptteil 1 aufeinander gelegt werden somit die passive Heizung verbessernd, und wobei im nächsten Schritt ihrer Applikation (Fig. 7, Schritt 3), der der Phase der Ernte leicht vorangeht oder mit ihr zusammenfällt, der freie Teil (2) geöffnet wird, so daß er den Zwischenraum zwischen zwei gepflanzten Reihen überdeckt und bis zur nächsten Plastikfolie zur vollständigen Bodenbedeckung reicht, wobei die Wiederholung dieses Verfahrens zur vollständigen Bedeckung des kultivierten Landes führt.

## Revendications

1. Feuille de plastique pour couvrir totalement le sol, pour la culture linéaire de l'asperge et la culture sous des fossés peu profonds, produite par la méthode d'extrusion de feuille soufflée, formée en tuyau aplati, avec une épaisseur jusqu'à 200 µm et une largeur à plat (B) jusqu'à 4 mètres, de préférence entre 1,4 et 1,6 mètres, **caractérisée en ce que**:
a) les parties superposées de la feuille de plastique sont soudées ensemble sur la longueur par deux séries de soudures (7a, 7b), chacune d'eux étant à une distance (s) jusqu'à 40 cm, de préférence 10 cm, du bord à plat (3 ou 4), qui séparent la feuille de plastique en largeur en trois poches (a, b, c), et
b) l'une des parties superposées de la feuille de plastique est coupée en longueur entre les deux séries de soudures (7a, 7b), très près de l'une d'eux (7b), de préférence à une distance inférieure à 5 cm,
formant la feuille de plastique en:
i) une partie principale (1) avec une largeur (B), consistée en poches (a) et (c) et la partie non coupée de la feuille de plastique de la poche précédente (b), qui peut être appliquée de façon qu'elle couvre fermement la ligne plantée quand les poches (a, c) sont remplies de poids, et
ii) une partie libre (2) avec une largeur environ (B-2s), consistée en la partie coupée de la feuille de plastique de la poche précédente (b), qui peut être appliquée fermée - superposée à la partie principale (1) - en couvrant seulement la ligne plantée, ou ouverte - étendrant la partie principale (1) quand elle est tournée - en couvrant l'espace intermédiaire entre deux lignes plantées successives.

2. Feuille de plastique pour couvrir totalement le sol selon la revendication 1, **caractérisée en ce que** ses soudures (7a, 7b) sont linéaires et continues (fig. 1).

3. Feuille de plastique pour couvrir totalement le sol selon la revendication 1, **caractérisée en ce que** ses soudures sont linéaires et interrompues, parties linéaires répétées (7a1, 7b1), chacune d'eux ayant une longueur préférée inférieure à un mètre, quand la distance entre deux parties soudées successives - la partie non soudée - est de préférence jusqu'à 15 cm (fig. 2).

4. Feuille de plastique pour couvrir totalement le sol selon la revendication 1, **caractérisée en ce que** ses soudures sont des parties soudées, formées et répétées (7a2, 7b2), chacune d'eux ayant une longueur préférée inférieure à un mètre, quand la distance entre deux parties soudées successives - la partie non soudée - est de préférence jusqu'à 15 cm (fig. 3).

5. Feuille de plastique pour couvrir totalement le sol selon la revendication 1, **caractérisée en ce qu'**elle a sur sa partie libre (2) - de préférence au milieu de sa largeur - trous (10) ou fentes (9) continus ou une combinaison d'eux à une distance régulière, qui peuvent être utilisés pour la canalisation d'eau de pluie vers le sol.

6. Feuille de plastique pour couvrir totalement le sol selon la revendication 1 et une ou plusieurs des revendications 2 à 5, **caractérisée en ce qu'**elle contient des matériaux additionnels qui absorbent la radiation infrarouge du sol, en faisant la feuille de plastique fonctionner comme une feuille thermique.

7. Feuille de plastique pour couvrir totalement le sol selon la revendication 1 et une ou plusieurs des revendications 2 à 5, **caractérisée en ce qu'**elle est non transparente et de préférence noire, en contribuant de cette façon à l'amélioration de la qualité de l'asperge et au procédé de la lutte biologique contre les mauvaises herbes.

8. Feuille de plastique pour couvrir totalement le sol selon la revendication 1 et une ou plusieurs des revendications 2 à 5, **caractérisée en ce que** l'une de ses surfaces est blanche (ou en général d'une couleur claire) pour réfléchir la radiation solaire et l'autre est noire (ou en général d'une couleur foncée) pour obtenir un espace complètement sombre au-dessus de la culture couverte.

9. Méthode pour couvrir le sol, pour la culture linéaire de l'asperge ou la culture sous des fossés peu profonds, **caractérisée par** l'utilisation de feuille de plastique pour couvrir totalement le sol, qui, à l'étape initiale de son application (fig. 7, étape 2), est placée sur la ligne plantée et reste fermée, une partie libre 2 et une partie principale 1 sont superposées l'une sur l'autre, en améliorant de cette façon le chauffage passif, et à l'étape consécutive de son application (fig. 7, étape 3), qui précède un peu ou coïncide avec le début de la période de la récolte, on ouvre la partie libre (2) pour couvrir l'espace intermédiaire entre deux lignes plantées jusqu'à la feuille de plastique suivante pour couvrir totalement le sol, et par la répétition de ce procédé on couvre totalement la terre cultivée.
